(19) Europäisches Patentamt
European Patent Office
Office européen des brevets

(11) EP 2 309 585 A1

(12) **EUROPÄISCHE PATENTANMELDUNG**

(43) Veröffentlichungstag:
**13.04.2011 Patentblatt 2011/15**

(51) Int Cl.:
***H01P 1/18*** *(2006.01)*

(21) Anmeldenummer: **09171350.3**

(22) Anmeldetag: **25.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Technische Universität Darmstadt
64283 Darmstadt (DE)**

(72) Erfinder:
- **Jakoby, Rolf
61191 Rosbach (DE)**
- **Gäbler, Alexander
64285 Darmstadt (DE)**

(74) Vertreter: **Stumpf, Peter
Kerkrader Straße 3
35394 Gießen (DE)**

(54) **Phasenschieber für Hochfrequenz-Signale**

(57) Gegenstand der vorliegenden Erfindung ist ein neuartiger Phasenschieber im Mikrowellenbereich. Er basiert auf einem teilweise mit Flüssigkristall (102) gefüllten Hohlleiter. Durch die kontrollierbare Orientierung des Flüssigkristalls als steuerbares Dielektrikum kann die elektrische Länge des Wellenleiters und somit die Phase des Ausgangssignals kontinuierlich eingestellt werden. Der große Vorteil gegenüber herkömmlichen Phasenschiebern nach Stand der Technik ergibt sich durch die gezielte Ausnutzung des Einflusses der Orientierung des Flüssigkristalls auf das elektrische Feld des Übertragungsmodes. Die aufgrund der Erfindung erzielten Güten der Phasenschieber eröffnen Möglichkeiten für die Realisierung kostengünstiger, dazu hochperformanter agiler Übertragungssysteme, welche mit den Phasenschiebern herkömmlicher Bauart und Technologie nicht erreicht werden können.

**[Anhängende Zeichnungen]**

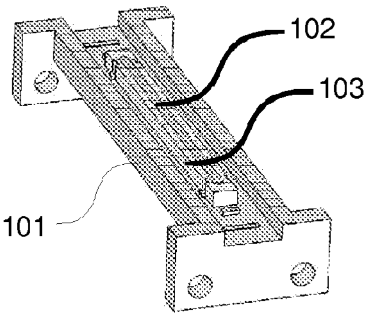


Fig. 1

EP 2 309 585 A1

## Beschreibung

Die vorliegende Erfindung betrifft einen Phasenschieber für Hochfrequenz-Signale.

### [Beschreibung und Einleitung des allgemeinen Gebietes der Erfindung]

Die Verknappung des verfügbaren Frequenzspektrums für Kommunikationssysteme und die Forderung nach immer mehr Funktionalität in immer kleineren Volumen erfordert die Entwicklung neuer Konzepte in der Hochfrequenztechnik. Ein Lösungsansatz bietet die Verwendung dynamisch steuer- oder rekonfigurierbarer HF - Schaltungen wie Phasenschiebern mit einer kontrollierbaren Phase des Ausgangssignals. Mit diesen Elementen können beispielsweise elektronisch schwenkbare Antennen realisiert werden, ohne dass hierfür mechanisch bewegbare Teile benötigt werden.

Herkömmliche Phasenschieber nach Stand der Technik erfordern aufgrund ihrer hohen Einfügeverluste meist eine zusätzliche Verstärkung des Signals, was die Anwendbarkeit aufgrund der hohen Kosten für derartige Lösungen limitiert. Des Weiteren zeigen diese Typen eine unerwünschte Abhängigkeit der Signalamplitude vom Steuerzustand. Um diesen Effekt zu kompensieren wird für hohe Anforderungen noch ein zusätzliches Kompensationsnetzwerk benötigt.

Ein Phasenschieber der mit niedrigen Kosten und sehr geringen Einfügungsverlusten eine vom Steuerzustand unabhängige Signalamplitude erzielen kann, eröffnet Möglichkeiten für die Realisierung hochperformanter agiler Übertragungssysteme, welche mit den Phasenschiebern herkömmlicher Bauart und Technologie nicht erreicht werden können.

### [Stand der Technik]

Bisher verwendete Lösungen zur Realisierung der Phasenschiebermodule im Mikrowellenbereich benutzen beispielsweise Mikromechanische Schalter (MEMS), steuerbare Mikrowellendielektrika wie Barium - Strontium - Titanat (BST), Halbleiterbauelemente oder Flüssigkristall.

Als gebräuchliches Qualitätsmerkmal wird die Figure of Merit (FoM) definiert, welche sich aus der erzielbaren Phasenverschiebung und den über alle Steuerzuständen auftretenden maximalen Verlusten in dB berechnet. Generell wird angestrebt, eine möglichst hohe Phasenverschiebung bei gleichzeitig geringen maximalen Einfügeverlusten zu erreichen. Sie beträgt nach dem aktuellen Stand der Technik je nach Technologie und Frequenzbereich zwischen 40 °/dB bis 90 °/dB für BST basierte Phasenschieber und 90 °/dB bei Anwendung der MEMS - Technologie. Halbleiterlösungen auf MMIC-Basis erreichen Phasenschiebergüten ~ 40 °/dB bis 60 °/dB im Mikrowellenbereich > 20GHz. Mit flüssigkristallbasierten Phasenschiebern konnte eine Phasenschiebergüte von bis zu 110 °/dB mit der invertierten Mikrostreifenleitung erreicht werden. Weitere Beispiele für Mikrostreifenleitungs-Phasenschieber, auf Basis von Materialien mit kontinuierlich abstimmbaren Dielektrika, sind z.B. in US5212463; US5451567 und US5479139 ausgeführt.

Nachteilig ist, dass bei den bisherigen Phasenschiebern eine kontrollierte Einstellung der Phase des elektromagnetischen Signals nur mit vergleichsweise hohen Einfügeverlusten durchgeführt werden kann und dass die Amplitude des Ausgangssignals vom Steuerzustand abhängig ist und somit oftmals unerwünschten Schwankungen unterliegt.

### [Aufgabe]

Aufgabe der vorliegenden Erfindung ist es, die Nachteile des Standes der Technik zu beheben.

### [Lösung der Aufgabe]

Diese Aufgabe wird erfindungsgemäß gelöst durch einen Phasenschieber, bei dem ein Hohlleiter nur in bestimmten Bereichen einen Flüssigkeitskristall aufweist. Die Wirkungsweise von auf Flüssigkristall (LC) basierenden Phasenschiebern im Mikrowellenbereich beruht auf der Ausnutzung der speziellen LC-Materialeigenschaften in diesem Frequenzbereich.

Der Flüssigkristall besitzt im Mikrowellenbereich geringe dielektrische Verluste und eine dielektrische Anisotropie, d.h. die für das HF-Feld effektive Materialpermittivität ist abhängig von der Orientierung des Flüssigkristalls. Diese Eigenschaft kann ausgenutzt werden, um die Wellenlänge und somit die Phase einer elektromagnetischen Welle im Mikro- und Millimeterwellenbereich zu steuern, indem die Orientierung des Flüssigkristalls und somit die effektiv wirksame Permittivität des jeweiligen HF- Ausbreitungstyps (Mode) gezielt geändert wird. Durch die variable effektive Permittivität kann die Wellenlänge und somit die Phase des HF-Signals gezielt geändert werden.

Die Orientierung des Flüssigkristalls kann durch Verwendung äußerer magnetischer Felder, unter Benutzung einer Oberflächenorientierung des Flüssigkristalls sowie einer Kombination dieser Methoden mit elektrischen Feldern kontinuierlich variiert werden.

Die maximal erreichbare Phasenverschiebung ist frequenzabhängig und kann durch Vorgabe der Länge des LC- gefüllten Bereiches auf gegebene Anforderungen eingestellt werden.

Es existieren bereits mehrere Ansätze für Mikrowellenphasenschieber basierend auf Flüssigkristall. Verwendet wurden bislang homogen (in Richtung der Wellenausbreitung) mit LC gefüllte TEM -Wellenleitertypen wie der inverted Microstrip Line oder der Finline. Bei diesen Wellenleiterstrukturen ist die Phasenschiebergüte durch den hohen Verlustanteil des Flüssigkristalls beschränkt was auf eine quasi konstante Feldverteilung der TEM - Übertragungsmoden unabhängig vom Steuerzustand der Flüssigkristalle zurückzuführen ist.

Im Unterschied zum Stand der Technik wird bei der Erfindung nur ein Teil eines Wellenleiters, speziell eines Hohlleiters mit einem Flüssigkristall **902** gefüllt (siehe Fig. 9a Ansicht von vorn, Fig. 9b Ansicht von der Seite) und das Signal wird nicht in einem TEM sondern mit einem quasi -TE- bzw. Hybridmode übertragen. Bevorzugt wird dabei der mittlere Bereich des Hohlleiterquerschnitts (parallel zur Wellenfront, Fig. 9a) mit Flüssigkristall **902** gefüllt. Die Abgrenzung des Flüssigkristalls wird durch ein dielektrisches Medium **901** z.B. Teflon erreicht. Damit können auch mehrere Flüssigkristallbereiche in einem Hohlleiter angeordnet werden. Diese Flüssigkristallbereiche können parallel oder senkrecht zur Wellenfront angeordnet sein. Damit eine ausreichende Phasenverschiebung möglich ist, sollte ein Hohlleiterquerschnitt (parallel zur Wellenfront, Fig. 9a) über die gesamte Fläche einen Flüssigkeitskristallanteil von 0 bis 90% aufweisen.

Bevorzugt ist eine Ausführung bei dem ein Hohlleiterquerschnitt (parallel zur Wellenfront, Fig. 9a).einen Flüssigkeitskristallanteil von:

- in der Breite (Richtung senkrecht zum elektrischen Feld) einen Anteil von 3 bis 90%, bevorzugt 3 bis 50 %, besonders bevorzugt 20 % Flüssigkristall,
- in der Höhe (Richtung parallel zum elektrischen Feld) einen Anteil von 60 bis 100 %, bevorzugt 95 % Flüssigkristall

aufweisen. Der Flüssigkeitskristall wirkt dabei als Dielektrikum. Der Rest des Querschnitts ist mit mindestens einem weiterem Dielektrikum z.B. Gas, Gasgemisch (z.B. Luft), Kunststoff, Glas, Keramik oder einer Kombination der Materialien gefüllt. Die Berandung besteht aus mindestens einem Metall, Metalllegierung z.B. als Metallfolien aus z.B. Aluminium, Gold, Silber, Kupfer oder einer Kombination der Materialien.

Die Orientierung des Flüssigkristalls wird durch eine angelegte Steuerspannung durchgeführt. Eine Reduktion der Steuerspannung kann erreicht werden, indem man eine Substanz zu Vororientierung auf die Flächen aufträgt, die mit dem Flüssigkristall in Verbindung stehen. Durch eine Einlage **903** (z.B. als Gitter oder Lochstreifen) die mit einer Substanz zur Vororientierung beschichtet ist, kann auch bei größeren Abständen der Vororientierungssubstanzen (mehr als 1 mm ) die Orientierung des Flüssigkristalls erreicht werden. Die Einlage **903** kann Elektroden zur Schaltung des Flüssigkristalls aufweisen bzw. als Elektrode ausgebildet sein.

Durch den verringerten Anteil und einer gezielten Anordnung des Flüssigkristalls im Hohlleiter ist ein vorteilhafter verringerter Energieverlust bei einer gleichzeitig hohen Steuerbarkeit erzielbar. Gleichzeitig wurden Schwankung der Signalamplituden unterdrückt. Damit konnte die Phasenschiebergüte gegenüber dem Stand der Technik deutlich gesteigert werden.

Der theoretisch erreichbare Wert der Phasenschiebergüte für nematische Flüssigkristalle ohne Berücksichtigung weiterer Verlustmechanismen des Wellenleiters kann für bisher veröffentlichte Phasenschieberkonzepte aus dem Verhältnis aus Materialsteuerbarkeit T und dem maximal auftretenden Verlustwinkel tan(ö) des Flüssigkristalls wie folgt angegeben werden:

$$\text{Gl. 1: } FoM \approx 6{,}6 \cdot \frac{\tau_{LC}}{\tan(\delta)_{\max}};mit: \tau_{LC} = \frac{\varepsilon_{r,II} - \varepsilon_{r,\perp}}{\varepsilon_{r,II}}$$

Der sich aus obiger Formel ergebende Wert der Phasenschiebergüte kann im Rahmen der durch die Erfindung erzielten Vorteile durch Ausnutzung der speziellen Eigenschaften nematischer Flüssigkristalle um den Faktor 2-3 übertroffen werden: Wie aus Fig. 7a und Fig. 7b hervorgeht, konzentriert sich die elektrische Feldverteilung mit zunehmend senkrechter LC Orientierung in dem Bereich des Hohlleiters, wo der Flüssigkristall ist. Diese Konzentration des elektrischen Feldes im Bereich der hohen Permittivität führt zu einer Erhöhung der Steuerbarkeit, da die Änderung der effektiven Permittivität des Wellenleiters dadurch vergrößert wird. Zum anderen wirkt sich die Feldverzerrung sehr günstig auf die LC - bedingten dielektrischen Einfügeverluste des Wellenleiters aus, da der Verlustwinkel einer LC - Orientierung senkrecht zum Feld (Fig. 7a) deutlich größer ist als die dielektrischen Verluste des LC's parallel zum - Feld (Faktor 2 bis 4). Durch die unterschiedliche Feldverteilung gehen die hohen Verlustanteile (Fig. 7a) nicht so stark ein, bei einer gleichzeitig hohen Steuerbarkeit. Die Phasenschiebergüte (das Verhältnis von Steuerbarkeit zu Energieverlust) wird durch die vorliegende Erfindung für Flüssigkristallphasenschieber somit deutlich gesteigert.

Werden die geometrischen Abmessungen der Erfindung für die entsprechende Betriebsfrequenz geeignet gewählt, sind die Wellenleiterverluste beider Steuerendzustände insgesamt gleich hoch und es tritt keine (für viele Anwendungen unerwünschte) Änderung der Signalamplitude über die beliebigen Steuerzustände auf wie es bei LC basierten Phasenschiebern und bei anderen Phasenschiebertechnologien nach dem bisherigen Stand der Technik der Fall ist. Die erreichbare FoM wird (ohne Berücksichtigung zusätzlicher metallischer und dielektrischer Verluste des den LC umgebenen Dielektrikums) in diesem Fall nur noch von dem kleineren Verlustwinkel des Flüssigkristalls begrenzt, (den dielektrischen Verlusten parallel zum einfallenden elektrischen Feld).

Im Vergleich zu allen anderen Bauarten und Technologien nach dem Stand der Technik einschließlich den bisher publizierten auf Flüssigkristall basierenden Phasenschiebern ist die erreichbare FoM aus diesem Grund unter Verwendung geeigneter LC's deutlich höher (~Faktor 2) gegenüber den bisher veröffentlichten kontinuierlichen Phasenschiebern im Mikrowellenbereich (>20 GHz).

Folgende mit einem Vector Network Analyzer 37397c von Anritzu durchgeführte Messung belegt die signifikante Verbesserung des erfindungsgemäßen Wellenleiterkonzeptes für Flüssigkristallphasenschieber (aufgebaut nach Fig. 4) experimentell (Fig. 8). Die Messung wurde mit einer double Offset-Short - SSLT Kalibration bei Raumtemperatur (23°C) durchgeführt. Als Bezugstore für die Kalibration des Wellenleiters wurden Standard WR 28 Hohlleiter mit den Abmessungen von 7.112mm und 3.556 mm mit einem Betriebsfrequenzbereich von 26.0 GHz bis 40.0 GHz gewählt. Die Orientierung des Flüssigkristalls erfolgte zur Demonstration des erfindungsgemäßen Wellenleiters mit einem externen magnetischen Feld. Fig. 8 zeigt die gemessenen Parameter. Der verwendete Flüssigkristall weißt eine erreichte FoM von 110 °/dB auf. Die erfindungsgemäße Phasenschiebergüte erreicht Werte von ~200 °/dB im Messintervall und liegt damit deutlich höher als alle bisher publizierten Ergebnisse in diesem Frequenzbereich.

Die erfindungsgemäße Ausführung ist nachfolgend erläutert, wobei die Erfindung alle nachfolgend aufgeführten bevorzugten Ausführungsformen einzeln und in Kombination umfasst.

**[Ausführungsbeispiele]**

In Fig. 1 ist ein Schnitt durch eine mögliche Realisierungsvariante der Erfindung dargestellt.

Sie besteht aus einem Rechteckhohlleiter, einem vorzugsweise symmetrisch mit LC **102** gefüllten Bereich in der Mitte der Struktur (Fig 1) und ein den Flüssigkristall umgebenden, vorzugsweise verlustarmen Dielektrikum **103.**

Der in dem ungestörten Bereich am Anfang und am Ende der Komponente zuerst ausbreitungsfähige und zur HF Signalübertragung genutzte Mode ist der TE10 Mode.

Der für die Phasenverschiebung funktionale Bereich des steuerbaren Phasenschiebers wird durch den mittleren, mit Flüssigkristall gefüllten Bereich gebildet, deren Querschnitt in Fig. 2 dargestellt ist. Der Übergang vom ungestörten Hohlleiter zur Phasenschiebersektion sollte vorzugsweise reflexionsarm ausgeführt werden. Dies kann zum Beispiel durch die in dargestellten quaderförmigen Metallisierungen 101 auf der Ober- und Unterseite des Hohlleiters realisiert werden.

Eine hinsichtlich Schaltgeschwindigkeit vorteilhafte Orientierungsmethode kann durch das Einbringen von Elektrodenstrukturen in den Hohlleiter (Fig. 3) erreicht werden. Die Orientierung des Flüssigkristalls wird, dieser Variante folgend, ausschließlich aktiv durch Anlegen einer definierten Spannung mit elektrischen Steuerfeldern realisiert.

Wie in Fig. 3a zu sehen ist, erfordert diese Variante eine Anzahl von Streifenleitungen auf der Ober- und Unterseite des Hohlleiters (Fig. 3c). Bei Anlegen der Bias - Spannung entsprechend Fig. 3a orientiert sich der Flüssigkristall senkrecht zum elektrischen Feld des quasi TE10 Modes, während die Spannungsbelegung nach Fig. 3b zu einer parallelen Ausrichtung der Flüssigkristalle führt. Bei Anlegen einer Spannungsfunktion zwischen diesen beiden Zuständen, lässt sich die Ausrichtung der LC Direktoren und darüber die Phase des Mikrowellensignals analog einstellen.

Durch das Einbringen dieser Streifenleitungen in den Hohlleiter entstehen mehrere (der Anzahl der Streifenleitungen entsprechend) ebenfalls ausbreitungsfähigen TEM Moden. Da der Betriebsmode für die Signalübertragung der Quasi-TE10 Mode ist, sind für eine hohe Phasenschiebergüte Einfügeverluste durch Energieübertragung vom Betriebsmode in die Streifenleitungstypen zu vermeiden. Dies kann zum einen durch die Verwendung stark verlustbehafteter Streifenleitungen realisiert werden, indem resistive Elektroden verwendet werden oder die Streifenleitungen aus besonders dünnen Metallisierungen <300nm gebildet werden. Eine andere Möglichkeit besteht darin, die Streifenleitungen als Tiefpass auszuführen (Fig. 3d). Liegt der Betriebsfrequenzbereich des Phasenschiebers oberhalb des Durchlassbereiches der Tiefpässe, ist ebenfalls nur eine stark gedämpfte Wellenausbreitung in den Streifenleitungen möglich. Für beide Ausführungsvarianten erscheinen die Elektroden unsichtbar für das HF-Feld im gewählten Betriebsfrequenzbereich.

Fig. 4 zeigt eine mögliche Ausführungsform nach Fig. 1. Der Übergang vom ungestörten Hohlleiter zu der mit Flüssigkristall gefüllten Leitungsstruktur wurde hier mit quaderförmigen Metallisierungen auf der Ober- und Unterseite des Hohlleiters realisiert (Fig. 4c). Dadurch kann der für die steuerbare Phasenverschiebung funktionale Wellenleiter breitbandig und reflexionsarm angepasst und gleichzeitig justiert werden. Die ca. 100nm dicken Streifenleitungselektroden nach Fig. 3d wurden aus aluminiumbeschichteter 23 $\mu$m dicken Mylar-Folie **401** hergestellt (Fig. 4a). Die Elektroden sind auf beiden Seiten durch kurze Schlitze (Fig. 4b) zum Anlegen der Steuerspannung herausgeführt (Fig. 4c).

Eine andere mögliche Variante ist in Fig. 5a zu sehen. Sie besteht aus einem WR 28 Standardhohlleiter (Betriebsbereich 26.0 GHz - 40 GHz) und einem im Querschnitt U-förmigen, mit Flüssigkristall gefüllten Teflonbehälter (Fig. 5b). Die zugespitzten Enden des Teflonbehälters dienen dazu den Übergang vom ungestörten Hohlleiter zur steuerbaren Wellenleiterstruktur reflexionsarm zu realisieren. Die Orientierung des Flüssigkristalls wird bei diesem Aufbau mit einem externen magnetischen Feld eingeprägt. Dies kann zum einen durch ein drehbares Paar von Permanentmagneten oder durch eine Anordnung stromgesteuerter Helmholzspulen realisiert werden

Weitere Ausführungsformen können Veränderungen im Querschnitt des Hohlleiters betreffen und können z.B. dazu dienen, den Frequenzbereich mit nur einem ausbreitungsfähigen Hohlleitermode zu vergrößern da die untere Grenzfrequenz höherer Hohlleitermoden durch das in den Wellenleiter eingefügte Dielektrikum reduziert wurde. Dies schließt sowohl elliptische bzw. Hohlleiter mit gebogener Berandung (Fig. 6a) sowie modifizierte Rechteckquerschnitte ein (Fig. 6b, LC-Container **601**)

**[Abbildungslegenden und Bezugszeichenliste]**

Fig. 1 zeigt einen Schnitt durch einen Phasenschieber
Fig. 2 Querschnitt der funktionalen Wellenleiterstruktur und E-Feldverteilung des Betriebsmodes
Fig. 3 Querschnitt des teilweise mit Flüssigkristall gefüllten Wellenleiters mit zwei möglichen Varianten der Steuerelektroden
Fig. 4 Realisierung der oben beschriebenen Phasenschieberkomponente
Fig. 5 alternative Realisierung mit externen magnetischem Feld zur Orientierung des Flüssigkristalls
Fig. 6 Hohlleiterquerschnitte
Fig. 7 Darstellungen des elektrischen Feldes vom Übertragungsmode für beide Steuerendzustände
Fig. 8 Messergebnisse der Amplituden und Phasendifferenz der Streuparameter sowie der sich daraus ergebenden Phasenschiebergüte (FoM)
Fig. 9 schematischer Querschnitt durch einen Hohlleiter a) von vorn b) seitlich

101 Metallisierungen
102 Flüssigkristall
103 Dielektrikum
401 Mylar-Folie
601 LC-Container
901 Dielektrikum
902 Flüssigkristall
903 Einlage

## Patentansprüche

1. Eine Vorrichtung zur Verschiebung von Phasen von Millimeter- oder Mikrowellen mittels Hohlleiter **dadurch gekennzeichnet, dass** der Hohlleiterquerschnitt mindestens zwei unterschiedliche Dielektrika aufweist.

2. Eine Vorrichtung nach Anspruch 1 **dadurch gekennzeichnet, dass** der Hohlleiterquerschnitt über die gesamte Fläche einen Flüssigkeitskristallanteil von 0 bis 90% und mindestens ein weiteres Dielektrikum aufweist.

3. Eine Vorrichtung nach Ansprüchen 1 bis 2 **dadurch gekennzeichnet, dass** ein Hohlleiterquerschnitt einen Flüssigkeitskristallanteil

    - in der Richtung senkrecht zum elektrischen Feld einen Anteil von 3 bis 90%, bevorzugt 3 bis 50 %, besonders bevorzugt 20 % Flüssigkristall,
    - in der Richtung parallel zum elektrischen Feld einen Anteil von 60 bis 100 %, bevorzugt 95 % Flüssigkristall aufweist.

4. Eine Vorrichtung nach Ansprüchen 1 bis 3 **dadurch gekennzeichnet, dass** der Hohlleiterquerschnitt parallel und oder senkrecht zur Wellenfront mehrere Flüssigkeitskristallbereiche aufweist.

**5.** Eine Vorrichtung nach Ansprüchen 1 bis 4 **dadurch gekennzeichnet, dass** das Dielektrikum einen Flüssigkristall, Kunststoff, Glas, Keramik oder einer Kombination dieser Materialien umfasst.

**6.** Eine Vorrichtung nach Ansprüchen 1 bis 5 **dadurch gekennzeichnet, dass** in dem Flüssigkristall mindestens eine Schicht zur Vororientierung des Flüssigkristalls und mindestens eine Elektrode zur Orientierung des Flüssigkristalls vorhanden ist.

## [Anhängende Zeichnungen]

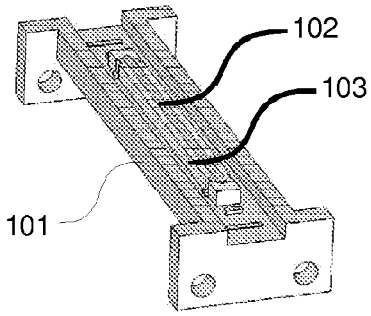


Fig. 1

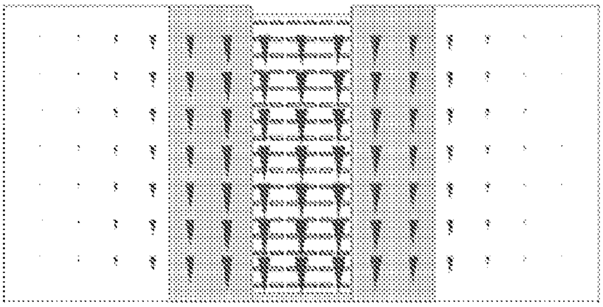

Fig. 2

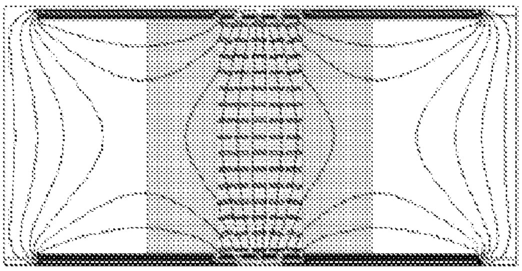

Fig. 3a

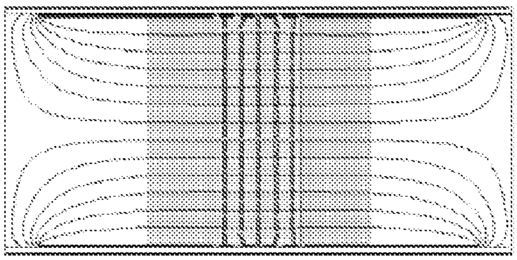

Fig. 3b

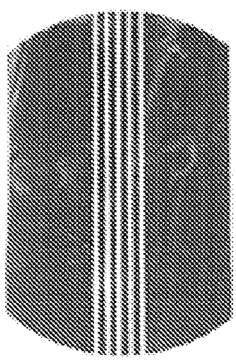

Fig. 3c

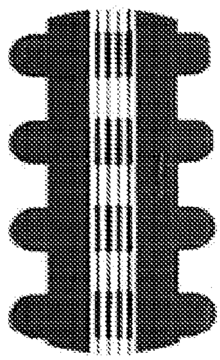

Fig. 3d

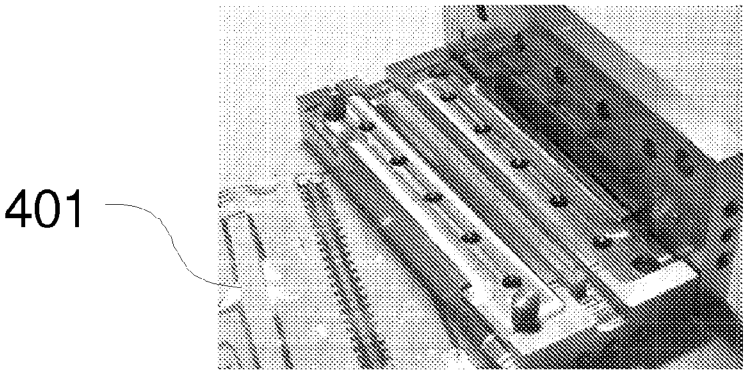


Fig. 4a

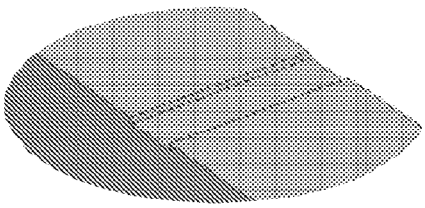

Fig. 4b

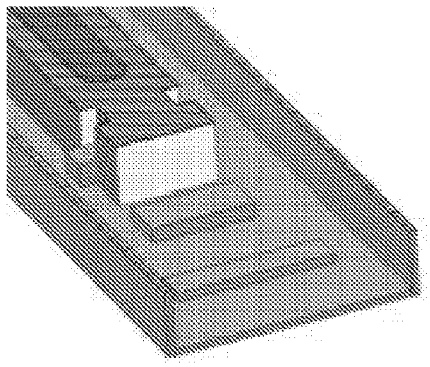

Fig. 4c

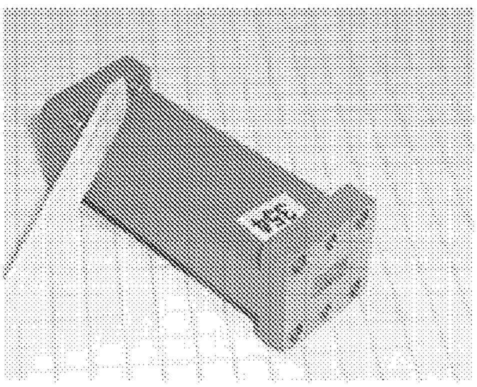

Fig. 5a

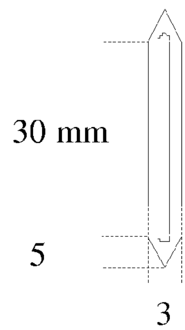


Fig. 5b

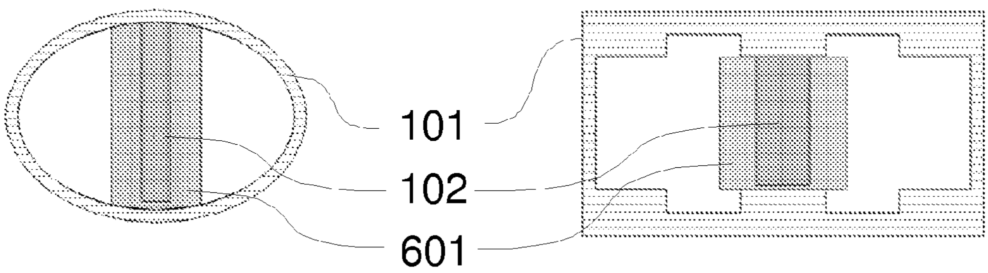


Fig. 6a

Fig. 6b

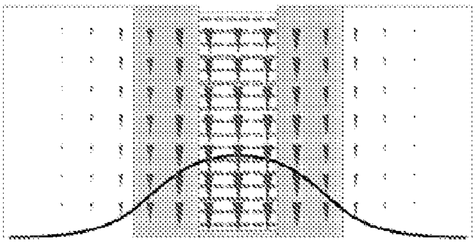

Fig. 7a

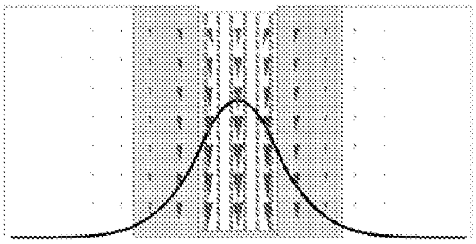

Fig. 7b

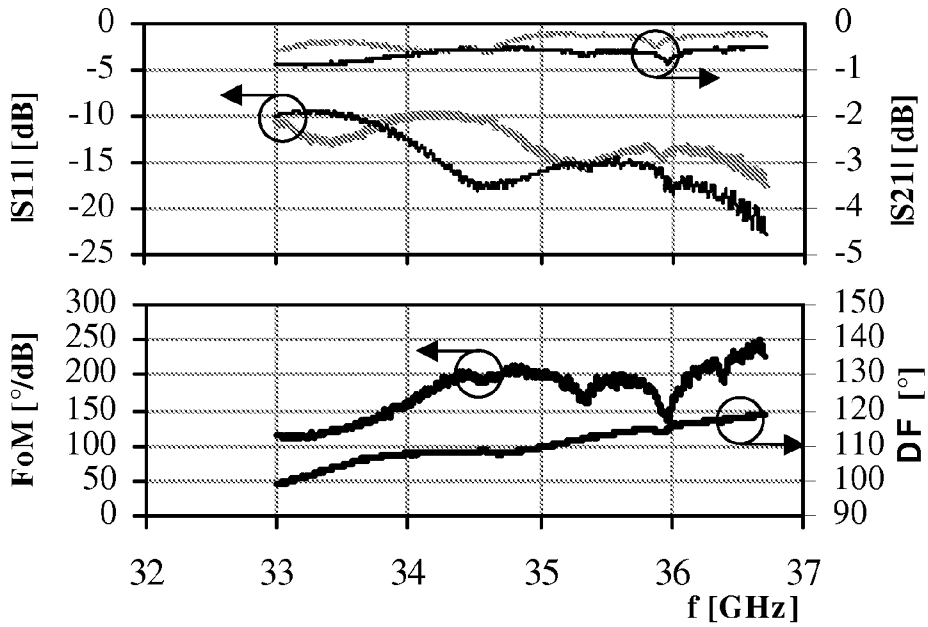


Fig. 8

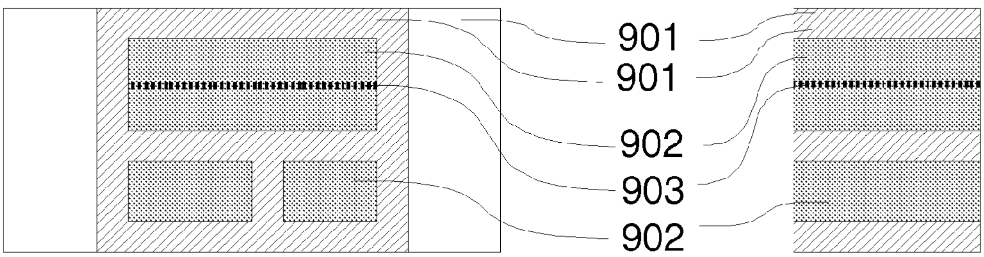


Fig. 9a

Fig. 9b

Europäisches Patentamt
European Patent Office
Office européen des brevets

# EUROPÄISCHER RECHERCHENBERICHT

Nummer der Anmeldung
EP 09 17 1350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TSANDOULAS, G.N.; WILLWERTH, F.G.; INCE, W.J.: "LSE20-Mode Characteristics in Phase-Shifter Parametrization" IEEE TRANSACTIONS ON MICROWAVE THEORY AND TECHNIQUES, Bd. 20, Nr. 4, April 1972 (1972-04), Seiten 253-258, XP002569323 ISSN: 0018-9480 | 1 | INV. H01P1/18 |
| Y | * das ganze Dokument * | 2-6 | |
| X | WHICKER, LAWRENCE R.: "Control technology for millimeter waves" CONFERENCE PROCEEDINGS MILITARY MICROWAVES '84, 24. Oktober 1984 (1984-10-24), - 26. Oktober 1084 (1084-10-26) Seiten 413-418, XP002569322 | 1 | |
| Y | * Seite 414, Zeile 14 - Seite 415, Zeile 9 * <br> * Abbildungen 1-3 * <br> * Zusammenfassung * | 2-6 | |
| | | | RECHERCHIERTE SACHGEBIETE (IPC) |
| Y | EP 0 472 404 A (HUGHES AIRCRAFT CO [US]) 26. Februar 1992 (1992-02-26) <br> * Spalte 3, Zeile 50 - Spalte 10, Zeile 28 * <br> * Abbildungen 1-11 * <br> * Zusammenfassung * | 2-5 | H01P |
| Y | US 3 805 197 A (BUSCHER H) 16. April 1974 (1974-04-16) <br> * Spalte 2, Zeile 24 - Spalte 4, Zeile 24 * <br> * Abbildungen 1-3 * <br> * Zusammenfassung * | 2-5 | |

-/--

Der vorliegende Recherchenbericht wurde für alle Patentansprüche erstellt

| Recherchenort | Abschlußdatum der Recherche | Prüfer |
|---|---|---|
| München | 18. Februar 2010 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

3

EPO FORM 1503 03.82 (P04C03)

Europäisches Patentamt
European Patent Office
Office européen des brevets

# EUROPÄISCHER RECHERCHENBERICHT

Nummer der Anmeldung
EP 09 17 1350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 60 214105 A (MITSUBISHI ELECTRIC CORP) 26. Oktober 1985 (1985-10-26)<br>* Abbildungen 3-5 *<br>* Zusammenfassung *<br>----- | 2-5 | |
| Y | STEFAN MUELLER ET AL: "Passive Phase Shifter for W-Band Applications using Liquid Crystals"<br>MICROWAVE CONFERENCE, 2006. 36TH EUROPEAN, IEEE, PI, 1. September 2006 (2006-09-01), Seiten 306-309, XP031005561<br>ISBN: 978-2-9600551-6-0<br>* Seite 306, Absatz II - Seite 307, Absatz III *<br>* Zusammenfassung *<br>----- | 6 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 18. Februar 2010 | von Walter, Sven-Uwe |

3

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 09 17 1350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2010

| Im Recherchenbericht angeführtes Patentdokument | Datum der Veröffentlichung | Mitglied(er) der Patentfamilie | Datum der Veröffentlichung |
|---|---|---|---|
| EP 0472404 A | 26-02-1992 | JP 4245803 A | 02-09-1992 |
| US 3805197 A | 16-04-1974 | KEINE | |
| JP 60214105 A | 26-10-1985 | JP 1646417 C | 13-03-1992 |
| | | JP 3006684 B | 30-01-1991 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5212463 A
- US 5451567 A
- US 5479139 A